# EUROPÄISCHE PATENTSCHRIFT

(11) **EP 2 453 326 B1**
(45) Veröffentlichungstag und Bekanntmachung des Hinweises auf die Patenterteilung: **25.12.2019**
(21) Anmeldenummer: 10190689.9
(22) Anmeldetag: 10.11.2010
(51) Int. Cl.: G05B 19/4069, G05B 19/418, G05B 17/02

(54) **Verfahren und System zur Bedienung einer Maschine aus der Automatisierungstechnik**
Method and system for operating an automated machine
Procédé et système destinés à la commande d'une machine issue de la technique d'automatisation

(43) Veröffentlichungstag der Anmeldung: 16.05.2012
(73) Patentinhaber: Siemens Aktiengesellschaft, 80333 München (DE)
(72) Erfinder: Wolf, Edgar, 71083 Herrenberg (DE)

(56) Entgegenhaltungen:
- WO-A1-2008/113305
- DE-A1- 10 140 969
- DE-A1-102004 051 106
- DE-A1-102005 047 543

## Beschreibung

Die Erfindung betrifft ein Verfahren zur Bedienung einer Maschine aus der Automatisierungstechnik. Weiterhin betrifft die Erfindung ein diesbezügliches System zur Bedienung einer Maschine aus der Automatisierungstechnik.

Bei Maschinen aus der Automatisierungstechnik, wie z.B. Werkzeugmaschinen, Produktionsmaschinen und/oder Robotern, ist es heutzutage üblich, die MMS-Software (Mensch-Maschine-Schnittstelle), welche zum Bedienen der Maschine dient, auf der gleichen Hardware, d.h. auf dem gleichen Prozessor oder auf den gleichen Prozessoren, auf dem auch die Steuersoftware der Maschine abläuft, ablaufen zu lassen. Die MMS-Software wird dabei fachspezifisch auch als HMI-Software (Human-Machine-Interface) bezeichnet. Dies bedingt bei einer notwendigen Hochrüstung ("Upgrade") der MMS-Software im Allgemeinen eine Stilllegung der Maschine. So muss, wenn auf der Steuereinrichtung der Maschine eine neue MMS-Software installiert werden soll, durch einen Bediener der Maschine, insbesondere durch einen Inbetriebnehmer, auf der Steuereinrichtung der Maschine die neue MMS-Software installiert werden. Dazu muss in aller Regel die Maschine für die Dauer des Hochrüstvorgangs, wie bereits erwähnt, stillgelegt werden. Während des Hochrüstvorgangs ist das Bedienen der Maschine durch die MMS-Software generell nicht möglich. Wenn die Maschine ein Teil einer verketteten Produktion ist, kann eine Hochrüstung der MMS-Software somit einen kompletten Produktionsstillstand bedeuten. War die Hochrüstung nicht erfolgreich, so muss noch zusätzliche Zeit in der die Maschine stillsteht für eine Rückrüstung der MMS-Software in Kauf genommen werden.

Wenn weiterhin die neue MMS-Software mehr Ressourcen (z.B. mehr Speicherplatz, längere Rechenzeit etc.) als die vorher genutzte MMS-Software benötigt, so muss zusätzlicher Zeitaufwand für die Installation einer leistungsfähigeren Hardware aufgewendet werden. Die oben aufgeführten Nachteile führen in vielen Fällen dazu, dass auf eine effizientere Bedienung der Maschine, welche durch eine neue MMS-Software ermöglicht würde, verzichtet wird, da die dadurch entstehenden Vorteile die durch den Produktionsstillstand in Kauf zu nehmenden Nachteile nicht aufwiegen.

Während des Betriebs der MMS-Software hängt die Effizienz der Bedienung der Maschine in starkem Maße von der Leistungsfähigkeit der Steuereinrichtung der Maschine ab. Da Maschinen aus der Automatisierungstechnik in der Praxis aber über einen langen Zeitraum nacheinander angeschafft werden, haben diese aufgrund des Entwicklungsfortschritts der Steuerungshardware unterschiedliche Leistungsfähigkeit. Vom Betreiber der Maschine ist aber häufig gewünscht, dass auf allen Steuereinrichtungen seiner Maschinen die gleiche MMS-Software abläuft, um eine einheitliche Bedienung zu ermöglichen. Dies ist allerdings aufgrund der leistungsschwächeren Hardware der Steuereinrichtungen bei älteren Maschinen oft nicht möglich und bedingt infolge dessen eine Hochrüstung der Hardware bei älteren Maschinen.

Aus der DE 10 2005 047 543 A1 ist ein Verfahren bzw. eine Vorrichtung zur Simulation eines Steuerungs- und/oder Maschinenverhaltens von Werkzeug- oder Produktionsmaschinen bekannt, wobei Daten über die Werkzeug- oder Produktionsmaschinen von dieser zu einer Simulationseinrichtung mittels eines Intranets und/oder mittels eines Internets übertragen werden. Es können auch Daten, insbesondere gegenüber den ursprünglich von der Werkzeug- oder Produktionsmaschine zu der Simulationseinrichtung übertragenen Daten geänderte Daten, von der Simulationseinrichtung über das Netzwerk zu der Werkzeug- oder Produktionsmaschine übertragen werden.

Aus der DE 101 40 969 A1 ist eine CNC-Steuerung mit einer Kommunikationsschnittstelle für die Eingabe von Objektdaten bekannt, die als plattformunabhängige Schnittstelle realisiert ist und dadurch eine hohe Portabilität der Software ermöglicht. Ein CNC-Kern ist als Webserver ausgeführt und die Bedienoberfläche als Client.

Aus der DE 10 2004 051106 A1 ist eine kunststoffverarbeitende Maschine mit einer Bedieneinheit, einer Maschinensteuerung und einem Subsystem mit einer eigenen Steuereinrichtung bekannt, wobei die Maschinensteuerung und die Steuereinrichtung jeweils eine Bildschirmausgabe erzeugen und über diese bedienbar sind und wobei die Bedieneinheit sowohl mit der Maschinensteuerung als auch mit der Steuereinrichtung zur Datenübertragung verbunden ist. Dabei sind sowohl die Bildschirmausgabe der Maschinensteuerung als auch die Bildschirmausgabe der Steuereinrichtung auf einem Bildschirm der Bedieneinheit darstellbar und auf dem Bildschirm in der jeweiligen Bildschirmausgabe vorgenommene Eingaben an die Einrichtung, von der die Bildschirmausgabe stammt, rückübermittelbar.

Es ist Aufgabe der Erfindung, eine Möglichkeit zu schaffen, die Leistungsfähigkeit der Bedienung einer Maschine aus der Automatisierungstechnik zu erhöhen, ohne dass die Anforderungen an die Hardware der Maschine erhöht werden.

Diese Aufgabe wird gelöst durch ein Verfahren nach Anspruch 1.

Weiterhin wird diese Aufgabe gelöst durch ein System nach Anspruch 6.

Vorteilhafte Ausbildungen des Verfahrens ergeben sich analog zu vorteilhaften Ausbildungen des Systems und umgekehrt. Vorteilhafte Ausbildungen der Erfindung ergeben sich aus den abhängigen Ansprüchen.

Es erweist sich als vorteilhaft, wenn die Bedieneingaben und die Kennung mittels einer auf der Maschine ablaufenden Clientsoftware über ein Datennetz an die auf einer externen Recheneinrichtung oder einer weiteren externen Recheneinrichtung ablaufende Kommunikationsserversoftware übermittelt werden. Durch die Verwendung einer Clientsoftware wird eine besonders einfache Anbindung der Maschine aus der Automatisierungstechnik an das Datennetz ermöglicht.

Weiterhin erweist es sich als vorteilhaft, wenn die Visualisierungsdaten über die Kommunikationsserversoftware und das Datennetz an die Maschine übermittelt werden, wobei eine auf der Maschine ablaufende Clientsoftware anhand der Visualisierungsdaten das grafische Ausgabebild ermittelt, wobei das grafische Ausgabebild am Bildschirm dargestellt wird. Hierdurch wir eine besonders einfache Ermittlung des Ausgabebilds ermöglicht.

Weiterhin erweist es sich als vorteilhaft, wenn die MMS-Applikationssoftware zur Simulation von Fertigungsabläufen der Maschine dient oder wenn die MMS-Applikationssoftware zur Veränderung von Teileprogrammen dient oder wenn die MMS-Applikationssoftware zur Diagnose der Maschine dient oder wenn die MMS-Applikationssoftware zur Überwachung der Maschine dient. Die oben beschriebenen Ausbildungen der MMS-Applikationssoftware stellen übliche Ausbildungen einer MMS-Applikationssoftware dar.

Die Maschine aus der Automatisierungstechnik kann z.B. als Werkzeugmaschine, Produktionsmaschine und/oder als Roboter ausgebildet sein.

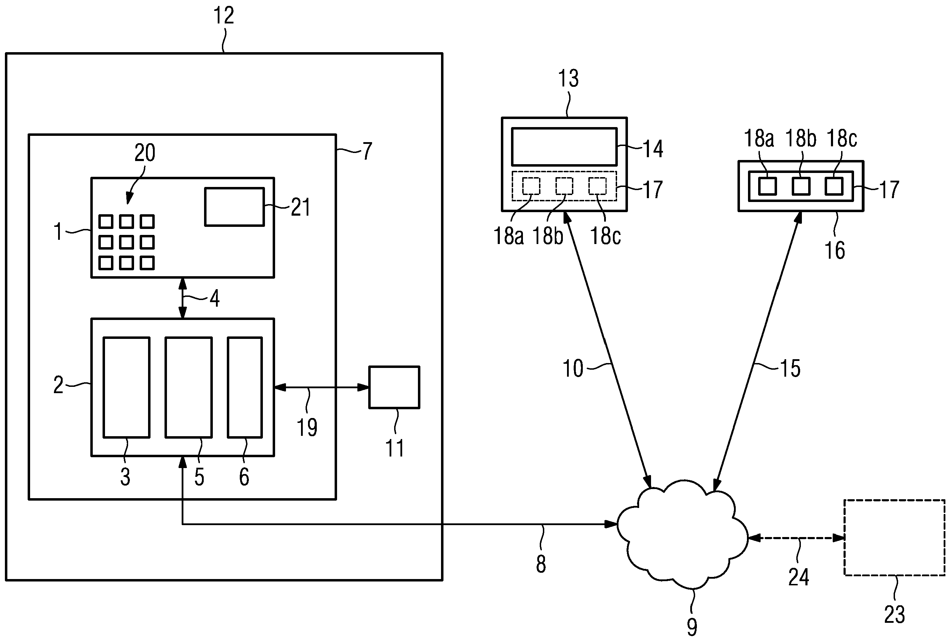

Ein Ausführungsbeispiel der Erfindung ist in der Zeichnung dargestellt und wird im Folgenden näher erläutert.
Die Figur zeigt ein erfindungsgemäßes Verfahren und System zur Bedienung einer Maschine aus der Automatisierungstechnik.

In der Figur ist in Form einer schematisierten blockförmigen Darstellung ein erfindungsgemäßes Verfahren und ein erfindungsgemäßes System zur Bedienung einer Maschine 12 aus der Automatisierungstechnik dargestellt. Im Rahmen des Ausführungsbeispiels ist die Maschine 12 als Werkzeugmaschine ausgebildet. Die Maschine 12 weist eine Steuereinrichtung 7 auf, die im Rahmen des Ausführungsbeispiels in Form einer CNC-Steuerung (Computer Numerical Control) ausgebildet ist. Die Steuereinrichtung 7 weist eine Bedieneinheit 1 auf, über die die Maschine 12 von einem Bediener vor Ort an der Maschine bedienbar ist. Die Bedieneinheit 1 weist zur Bedienung der Maschine Eingabemittel 20 auf, die im Rahmen des Ausführungsbeispiels in Form der dargestellten Tasten ausgebildet sind, sowie einen Bildschirm 21. Weiterhin weist die Steuereinrichtung 7 eine Recheneinheit 2 auf, die über eine Verbindung 4 zur Übermittlung von Daten mit der Bedieneinheit 1 verbunden ist. Die Recheneinheit 2 weist einen einzelnen oder mehrere Prozessoren auf, auf dem/denen eine Clientsoftware 3, eine MMS-Grundsoftware 5 und eine Steuersoftware 6 ablaufen. Die Prozessoren können dabei auf einer einzelnen elektrischen Baugruppe oder mehreren elektrischen Baugruppen angeordnet sein. An dieser Stelle sei angemerkt, dass selbstverständlich auf der Recheneinheit 2 noch mehr als die in der FIG angegebene Software ablaufen kann, wobei jedoch der Übersichtlichkeit halber in der Figur nur die zum Verständnis der Erfindung wesentliche Software dargestellt ist.

Die Steuersoftware 6 dient dabei zur Ermittlung von z.B. Steuergrößen, wie z.B. Sollgrößen zur Steuerung von Antrieben 11 der Maschine, mittels derer Maschinenelemente der Maschine 12, wie z.B. eine Werkzeugspindel und/oder ein Maschinentisch, bewegt werden. Die Steuereinrichtung 7 und insbesondere die Recheneinheit 2 ist zur Steuerung der Antriebe 11 über eine Verbindung 19 mit den Antrieben 11 verbunden.

Im Unterschied zu handelsüblichen Steuereinrichtungen läuft auf der Recheneinheit 2 keine vollständige MMS-Software (Mensch-Maschine-Schnittstelle), die eine luxuriöse und effiziente Bedienung der Maschine 12 ermöglicht, sondern nur eine MMS-Grundsoftware 5, die vorzugsweise nur eine rudimentäre Bedienung, d.h. eine Basisbedienung der Maschine erlaubt, ab. So können im Rahmen des Ausführungsbeispiels mit der MMS-Grundsoftware die Maschinenachsen der Maschine 12 bewegt werden und für die Fertigung z.B. ein Teileprogramm zur Fertigung eines Werkstücks gestartet werden. Die MMS-Grundsoftware kann z.B. aus der ersten Version der MMS-Software, welche bei der Erst-Inbetriebnahme der Maschine 12 auf die Recheneinheit 2 installiert wurde, bestehen.

Die Grundidee der Erfindung besteht dabei darin, z.B. gewünschte erweitere und/oder verbesserte Bedienfunktionalitäten in Form von MMS-Applikationssoftware zur Verfügung zu stellen und diese auf einer externen Recheneinrichtung ablaufen zu lassen, so dass die Bedienfunktionalitäten der Maschine 12 beliebig erweitert werden können, ohne dass z.B. der Bedarf an Rechenzeit und/oder Speicherplatzbedarf, welche die Recheneinheit 2 zur Ausführung der Bedienfunktionalitäten der Maschine benötigt, vergrößert wird.

Die Steuereinrichtung 7 und insbesondere die Recheneinheit 2, sowie eine externe Recheneinrichtung 13 und eine weitere externe Recheneinrichtung 16 sind zur Übermittlung von Daten mit einem Datennetz 9 verbunden, was durch Doppelpfeile 8, 10 und 15 dargestellt ist. Das Datennetz 9 kann z.B. in Form eines LAN (Local Area Network), wie z.B. einem Fabriknetz und/oder in Form eines WAN (Wide Area Network), wie z.B. dem Internet, vorliegen. Im Rahmen der vorliegenden Erfindung wird unter einer externen Recheneinrichtung dabei eine Recheneinrichtung verstanden, die nicht Bestandteil der Maschine 12 ist und von der Maschine 12 vorzugsweise örtlich entfernt angeordnet ist.

Die Clientsoftware 3 realisiert ein Interface, über das Daten von der Bedieneinheit 1 und der Recheneinheit 2 an das Datennetz 9 und von dort weiter an die externe Recheneinrichtung 13 übermittelt werden können. So werden z.B. mit Hilfe der Clientsoftware 3 Bedieneingaben, welche mittels der Eingabemittel 20 und der Bedieneinheit 1 von einem Bediener der Maschine 12 eingegeben wurden und eine Kennung an das Datennetz 9 und von dort an eine auf der externen Recheneinrichtung 13 ablaufende Kommunikationsserversoftware 14 übermittelt. Weiterhin können mit Hilfe der Clientsoftware 3 Daten vom Datennetz 9 von der externen Recheneinrichtung 13 an die Recheneinheit 2 und die Bedieneinheit 1 übermittelt werden.

Im Rahmen des Ausführungsbeispiels weist das erfindungsgemäße System die weitere externe Recheneinrichtung 16 auf, auf dem eine Applikationsserversoftware 17 und die MMS-Applikationssoftware 18a, die MMS-Applikationssoftware 18b und die MMS-Applikationssoftware 18c ablaufen. Die Applikationsserversoftware 17 steuert dabei den Ablauf der MMS-Applikationssoftware 18a, 18b und 18c. Bei der MMS-Applikationssoftware 18a kann es sich z.B. um eine Simulationssoftware zur Simulation von Fertigungsabläufen der Maschine, bei der MMS-Applikationssoftware 18b z.B. um eine Software zur Diagnose der Maschine und bei der MMS-Applikationssoftware 18c z.B. um eine Software zur Veränderung von Teileprogrammen handeln. Selbstverständlich können noch weit mehr als die dargestellten drei MMS-Applikationssoftware-Beispiele auf der externen Recheneinrichtung 16 ablaufen. Die MMS-Appliktionssoftware dient zur Erweiterung und Verbesserung und/oder Effizienzerhöhung der MMS-Grundsoftware 5. Je nach Anzahl der unterschiedlichen MMS-Applikationssoftware wird eine mehr oder weniger umfangreiche und komfortable Bedienung der Maschine ermöglicht.

Eine MMS-Applikationssoftware (z.B. eine Simulationssoftware zur Simulation von Fertigungsabläufen) kann dabei,wenn mehrere Maschinen aus der Automatisierungstechnik vorhanden sind, mehrfach auf der weiteren externen Recheneinrichtung 16 vorhanden sein und quasi parallel von der externen Recheneinrichtung ausgeführt werden. Die jeweilige MMS-Applikationssoftware ist dann jeweilig einer bestimmten Maschine zugeordnet. Die gegebenenfalls zusätzlich zu der Maschine 12 vorhandenen weiteren Maschinen sind in der Figur gestrichelt dargestellt und mit dem Bezugszeichen 23 versehen.

Es werden mittels der Eingabemittel 20 vorgenommene Bedieneingaben eines Bedieners der Maschine 12 sowie eine Kennung und gegebenenfalls weitere Daten von der Recheneinheit 2 über das Datennetz 9 an die auf der externen Recheneinrichtung 13 ablaufende Kommunikationsserversoftware 14 übermittelt. Die Kommunikationsserversoftware 14 ermittelt anhand der Kennung die zu der Recheneinheit 2 und damit die zu der Maschine 12 und den Bedieneingaben zugehörige MMS-Applikationssoftware für die die Bedieneingaben und die Daten bestimmt sind. Die Kommunikationsserversoftware 14 ermittelt dies im Rahmen des Ausführungsbeispiels anhand einer Tabelle, in der zu vorhandenen Kennungen die Bezeichnung der zu der jeweiligen Kennung zugehörigen MMS-Applikationssoftware hinterlegt ist. Eine Kennung kann z.B. aus der weltweit einmalig vergebenen Fertigungsnummer der Steuereinrichtung 7 bestehen und einem Code, der angibt, für welche MMS-Applikationssoftware die Bedieneingaben und Daten bestimmt sind.

Die Kommunikationsserversoftware 14 übermittelt über das Datennetz 9 die Bedieneingaben und Daten an die auf der weiteren externen Recheneinrichtung 16 ablaufende, von der Kommunikationsserversoftware 14 ermittelte, der Maschine 12 zugehörige MMS-Applikationssoftware. Die MMS-Applikationssoftware ermittelt anhand der Bedieneingaben Visualisierungsdaten, die ein auf dem Bildschirm 21 darzustellendes grafisches Ausgabebild angeben. Die Visualisierungsdaten bestehen somit nicht nur aus z.B. auf dem Bildschirm 21 darzustellenden Zahlenwerten, sondern enthalten auch Informationen darüber wie das grafische Ausgabebild dem Bediener auf dem Bildschirm 21 erscheinen soll. Die Visualisierungsdaten beschreiben somit das auf dem Bildschirm 21 darzustellende grafische Ausgabebild. Falls es sich bei der MMS-Applikationssoftware, z.B. um eine Software, die zur Simulation von Fertigungsabläufen der Maschine dient, werden nicht nur Daten von der MMS-Applikationssoftware ermittelt, die z.B. angeben, wie die aktuelle Lage eines darzustellenden Maschinentisches der Maschine 12 gerade ist, sondern auch Daten, die angeben, wie das grafische Bild aussehen soll, das auf dem Bildschirm 21 angezeigt wird, d.h. Daten darüber wie der Maschinentisch am Bildschirm 21 dargestellt wird, d.h. welche Form und Aussehen er hat.

Es sei an dieser Stelle angemerkt, dass falls die Eingabemittel der Bedieneinheit 1 z.B. eine Computermaus umfassen, die Visualisierungsdaten vorzugsweise auch die Daten zur ordnungsgemäßen Anzeige auf dem Bildschirm 21 des mit Hilfe der Computermaus bewegbaren Mauszeigers beinhalten. Entsprechendes gilt auch für andere Eingabegeräte.

Anschließend werden die Visualisierungsdaten von der MMS-Applikationssoftware über die Kommunikationsserversoftware 14 und das Datennetz 9 an die Maschine 12 übermittelt, wobei die Clientsoftware 3 anhand der Visualisierungsdaten das grafische Ausgabebild ermittelt und am Bildschirm 21 der Bedieneinheit 1 ausgibt, so dass das grafische Ausgabebild am Bildschirm 21 dargestellt wird.

Die externe Recheneinrichtung und/oder die weitere externe Recheneinrichtung können z.B. beim Hersteller der Maschine aus der Automatisierungstechnik oder beim Hersteller der Steuereinrichtung 7 aufgestellt sein. Die externe Recheneinrichtung 13 und die weitere externe Recheneinrichtung 16 können dabei z.B. in Form eines einzelnen Rechners oder mehrerer miteinander verbundener Rechner vorliegen.

Im Folgenden soll anhand eines konkreten Beispiels noch einmal das erfindungsgemäße Verfahren verdeutlicht werden.

Ein Betreiber der Maschine 12 ist mit der Bedienfunktionalität, die ihm die MMS-Grundsoftware 5 bietet, nicht mehr zufrieden, sondern möchte diese um eine Simulationssoftware zur Simulation von Fertigungsabläufen der Maschine erweitern, so dass z.B. vor Ablauf eines Teileprogramms, das die Bewegung eines Werkzeugs steuert, der Bewegungsvorgang simuliert und dem Bediener am Bildschirm 21 angezeigt werden kann. Erfindungsgemäß wird nun nicht wie beim Stand der Technik eine neue MMS-Software, welche um eine Simulationssoftware erweitert wurde, auf die Recheneinheit 2 geladen, sondern es wird z.B. die MMS-Applikationssoftware 18a, die die gewünschte Simulation von Fertigungsabläufen der Maschine ermöglicht, auf die weitere externe Recheneinrichtung 16 geladen, wobei diese unter der Kontrolle der Applikationsserversoftware 17 auf der weiteren externen Recheneinrichtung 16 abläuft. Die MMS-Grundsoftware 5 und gegebenenfalls die Clientsoftware 3 werden anschließend z.B. durch eine geänderte Parametrierung geringfügig angepasst, so dass diese wissen, dass eine MMS-Applikationssoftware 18a zur Simulation von Fertigungsabläufen vorhanden ist.

Wählt der Bediener z. B. durch Aufruf eines entsprechenden Menüs in der Bedieneinheit 1 über die Eingabemittel 20 die Simulationsfunktionalität an, so werden seine Bedieneingaben, d.h. die von ihm erzeugten Eingabedaten, zusammen mit einer Kennung, die die Information enthält, um welche Steuereinrichtung und damit um welche Maschine es sich handelt und für welche MMS-Applikationssoftware die Bedieneingaben bestimmt sind, an die Kommunikationsserversoftware 14 übermittelt. Diese ermittelt anhand der Kennung die für die Maschine 12 und insbesondere die Steuereinrichtung 7 zugehörige gewünschte Simulationssoftware, d.h. im Ausführungsbeispiel die MMS-Applikationssoftware 18a. Die Bedieneingaben werden anschließend von der Kommunikationsserversoftware 14 an die MMS-Applikationssoftware 18a übermittelt.

Weiterhin werden von der Maschine 12 und insbesondere von der Steuereinrichtung 7 und insbesondere von der Recheneinheit 2, zur Simulation benötigte Daten, wie z.B. von der Steuersoftware 6 erzeugte Sollgrößen zur Steuerung der Antriebe 11 und/oder verwendete Einspannmittel zum Einspannen des Werkstücks etc., von der Maschine 12 über die Kommunikationsserversoftware 14 an die MMS-Applikationssoftware 18a übermittelt. Die MMS-Applikationssoftware 18a simuliert anschließend den Fertigungsablauf und übermittelt über die Kommunikationsserversoftware 14 als Ergebnis Visualisierungsdaten, die das auf dem Bildschirm 21 darzustellende grafische Ausgabebild angeben, an die Clientsoftware 3 der Steuereinrichtung 7, die aus den Visualisierungsdaten das grafische Ausgabebild ermittelt. Anschließend wird das grafische Ausgabebild am Bildschirm 21 dargestellt. Die Visualisierungsdaten liegen quasi in Form eines Bilddatenstroms, der von der Clientsoftware 3 zur Anzeige auf dem Bildschirm 21 gebracht wird, vor.

An dieser Stelle sei angemerkt, dass die weitere externe Recheneinrichtung 16 zur Realisierung der Erfindung nicht unbedingt vorhanden sein muss, sondern dass die MMS-Applikationssoftware 18a, 18b und 18c und die Applikationsserversoftware 17 auch auf der externen Recheneinrichtung 13 zusammen mit der Kommunikationsserversoftware 14 ablaufen können, was in der FIG gestrichelt gezeichnet dargestellt ist.

Auf der externen Recheneinrichtung 13 oder der weiteren externen Recheneinrichtung 16 kann dabei, falls mehrere Maschinen aus der Automatisierungstechnik vorhanden sind, die den Maschinen jeweilig zugeordnete MMS-Applikationssoftware ablaufen. Da die Kennung eine eindeutige Identifikation der Steuereinrichtung 7 ermöglicht, kann die jeweilige MMS-Applikationssoftware ihrer jeweilig zugehörigen Steuereinrichtung 7 zugeordnet werden. Die Maschinen sind dabei wie die Maschine 12 über das Datennetz 9 mit der externen Recheneinrichtung 12 und insbesondere mit der Kommunikationsserversoftware 14 verbunden. Die Erfindung funktioniert beim Vorhandensein von mehreren Maschinen anlog wie oben zur Maschine 12 beschrieben. In der FIG sind die gegebenenfalls vorhandenen weiteren Maschinen gestrichelt gezeichnet dargestellt und mit dem Bezugszeichen 23 versehen. Die Maschinen 23 sind zur Übermittlung von Daten mit dem Datennetz 9 verbunden, was durch einen gestrichelt gezeichneten Doppelpfeil 24 dargestellt ist.

Von der Steuereinrichtung 7 und insbesondere von der Steuersoftware 6 können verschiedenste Daten, die von der jeweiligen MMS-Applikationssoftware zur Realisierung ihrer Funktionalität benötigt werden, von der Maschine 12 über die Kommunikationsserversoftware 14 an die MMS-Applikationssoftware übermittelt werden. So können z.B. Steuergrößen der Maschine oder Zustände der Maschine (Maschine produziert, Maschine produziert nicht) an die MMS-Applikationssoftware übermittelt werden.

Durch die Erfindung können die Bedienfunktionalitäten der Maschine 12 beliebig erweitert werden, ohne dass der Ressourcenverbrauch der Hardware der Maschine hierdurch steigt. Da die Maschine 12 weiterhin über eine auf der Steuereinrichtung 7 ablaufende MMS-Grundsoftware 5 verfügt, kann die Fertigung der Maschine weitergehen, auch wenn die Verbindung zu der MMS-Applikationssoftware gestört ist, da die MMS-Basissoftware 5 eine Grundbedienfunktionalität unabhängig von der Verfügbarkeit der MMS-Applikationssoftware sicherstellt.

Die externe Recheneinrichtung und/oder die weitere externe Recheneinrichtung können dabei z.B. Bestandteil eines Rechenzentrums sein. Dies kann ein Rechenzentrum für eine große Fertigungs- oder Produktionsstätte sein. Es besteht aber auch die Möglichkeit, dies als Service in Form eines ASP (Application Service Providing) zu realisieren. Dies ist insbesondere sinnvoll, wenn die Produktionsinfrastruktur der zu betreibenden Maschinen aus der Automatisierungstechnik räumlich oder global verstreut ist.

Die externe Recheneinrichtung 13 oder die externe Recheneinrichtung 13 zusammen mit der weiteren externen Recheneinrichtung 16 stellen eine Einrichtung zur Bedienung einer Maschine aus der Automatisierungstechnik dar.

Falls auch weiterhin als Bestandteil der MMS-Basissoftware oder zusätzlich zur MMS-Basissoftware zumindest ein Teil der MMS-Applikationssoftware auf der Maschine 12 und insbesondere auf der Recheneinheit 2 ablaufen soll, so ist eine Aufteilung von MMS-Applikationssoftware, welche auf der externen Recheneinrichtung 13 oder der weiteren externen Recheneinrichtung 16 ablaufen soll und der MMS-Applikationssoftware, welche auf der Steuereinrichtung 2 ablaufen soll, derart sinnvoll, dass MMS-Applikationssoftware, welche bei einer fehlerhaften Installation einen Produktionsausfall verursachen kann, auf der externen Recheneinrichtung 13 oder der weiteren externen Recheneinrichtung 16 abläuft und MMS-Applikationssoftware, welche diesbezüglich eher unkritisch ist, auf der Steuereinrichtung 7 abläuft.

## Patentansprüche

1. Verfahren zur Bedienung einer Maschine (12) aus der Automatisierungstechnik, wobei an einer einen Bildschirm (21) aufweisenden Bedieneinheit (1) der Maschine (12) vorgenommene Bedieneingaben und eine Kennung über ein Datennetz (9) an eine auf einer externen Recheneinrichtung (13) ablaufende Kommunikationsserversoftware (14) übermittelt werden,
**dadurch gekennzeichnet, dass** die Kommunikationsserversoftware (14) anhand der Kennung eine zu der Maschine (12) und den Bedieneingaben zugehörige Mensch-Maschine-Schnittstelle - Applikationssoftware (18a,18b,18c) ermittelt, wobei die Kommunikationsserversoftware (14) die Bedieneingaben an die auf der externen Recheneinrichtung (13) oder einer weiteren externen Recheneinrichtung (16) ablaufende ermittelte Mensch-Maschine-Schnittstelle - Applikationssoftware (18a,18b,18c) übermittelt, wobei die Mensch-Maschine-Schnittstelle - Applikationssoftware (18a,18b,18c) anhand der Bedieneingaben Visualisierungsdaten ermittelt, wobei die Visualisierungsdaten ein auf dem Bildschirm (13) darzustellendes grafisches Ausgabebild angeben, wobei die Visualisierungsdaten Informationen darüber enthalten, wie das grafische Ausgabebild dem Bediener auf dem Bildschirm erscheinen soll, wobei die Visualisierungsdaten über die Kommunikationsserversoftware (14) und das Datennetz (9) an die Maschine (12) übermittelt werden, wobei anhand der Visualisierungsdaten das grafische Ausgabebild auf dem Bildschirm (21) dargestellt wird, und wobei die externe Recheneinrichtung nicht Bestandteil der Maschine und von der Maschine örtlich entfernt angeordnet ist.

2. Verfahren nach Anspruch 1,
**dadurch gekennzeichnet, dass** die Bedieneingaben und die Kennung mittels einer auf der Maschine (12) ablaufenden Clientsoftware (3) über ein Datennetz (9) an die auf einer externen Recheneinrichtung (13) oder einer weiteren externen Recheneinrichtung (16) ablaufende Kommunikationsserversoftware (14) übermittelt werden.

3. Verfahren nach Anspruch 1 oder 2,
**dadurch gekennzeichnet, dass** die Visualisierungsdaten über die Kommunikationsserversoftware (14) und das Datennetz (9) an die Maschine (12) übermittelt werden, wobei eine auf der Maschine (12) ablaufende Clientsoftware (3) anhand der Visualisierungsdaten das grafische Ausgabebild ermittelt, wobei das grafische Ausgabebild auf dem Bildschirm (21) dargestellt wird.

4. Verfahren nach einem der vorhergehenden Ansprüche,
**dadurch gekennzeichnet, dass** die Mensch-Maschine-Schnittstelle - Applikationssoftware (18a,18b,18c) zur Simulation von Fertigungsabläufen der Maschine (12) dient oder dass die Mensch-Maschine-Schnittstelle - Applikationssoftware (18a,18b,18c) zur Veränderung von Teileprogrammen dient oder dass die Mensch-Maschine-Schnittstelle - Applikationssoftware (18a,18b,18c) zur Diagnose der Maschine (12) dient oder dass die Mensch-Maschine-Schnittstelle - Applikationssoftware (18a,18b,18c) zur Überwachung der Maschine (12) dient.

5. Verfahren nach einem der vorhergehenden Ansprüche,
**dadurch gekennzeichnet, dass** die Maschine aus der Automatisierungstechnik, als Werkzeugmaschine, Produktionsmaschine und/oder als Roboter ausgebildet ist.

6. System zur Bedienung einer Maschine (12) aus der Automatisierungstechnik, aufweisend eine Steuereinrichtung (7) der Maschine (12), eine Bedieneinheit (1) der Maschine (12) und eine externe Recheneinrichtung (13), wobei die Steuereinrichtung (7) zur Übermittlung von an der einen Bildschirm (21) aufweisenden Bedieneinheit (1) vorgenommenen Bedieneingaben und einer Kennung über ein Datennetz (9) an eine auf der externen Recheneinrichtung (13) ablaufende Kommunikationsserversoftware (14) ausgebildet ist, wobei die Kommunikationsserversoftware (14) zur Ermittlung einer zu der Maschine (12) und den Bedieneingaben zugehörigen Mensch-Maschine-Schnittstelle - Applikationssoftware (18a,18b,18c) anhand der Kennung ausgebildet ist, wobei die Kommunikationsserversoftware (14) zur Übermittlung der Bedieneingaben an die auf der externen Recheneinrichtung (13) oder einer weiteren externen Recheneinrichtung (16) ablaufende ermittelte zugehörige Mensch-Maschine-Schnittstelle - Applikationssoftware (18a, 18b,18c) ausgebildet ist, wobei die Mensch-Maschine-Schnittstelle - Applikationssoftware (18a,18b,18c) zur Ermittlung von Visualisierungsdaten anhand der Bedieneingaben ausgebildet ist, wobei die Visualisierungsdaten ein auf dem Bildschirm (21) darzustellendes grafisches Ausgabebild angeben, wobei die Visualisierungsdaten Informationen darüber enthalten, wie das grafische Ausgabebild dem Bediener auf dem Bildschirm (21) erscheinen soll, wobei das System zur Übermittlung der Visualisierungsdaten über die Kommunikationsserversoftware (13) und das Datennetz (9) an die Steuereinrichtung (7) ausgebildet ist, wobei die Steuereinrichtung (7) zur Darstellung des grafischen Ausgabebilds am Bildschirm (21) anhand der Visualisierungsdaten ausgebildet ist, und wobei die externe Recheneinrichtung nicht Bestandteil der Maschine (12) und von der Maschine (12) örtlich entfernt angeordnet ist.

## Claims

1. Method for operating a machine (12) from the field of automation engineering, wherein operating inputs that are entered at an operating unit (1), this having a screen (21), of the machine (12) and an identification code are transferred via a data network (9) to communication server software (14) running on an external computing device (13), **characterised in that** on the basis of the identification code the communication server software (14) determines MMI application software (18a,18b,18c) that is associated with the machine (12) and the operating inputs, wherein the communication server software (14) transfers the operating inputs to the MMI application software (18a,18b,18c) that has been determined and is running on the external computing device (13) or on a further external computing device (16), wherein the MMI application software (18a,18b,18c) determines visualisation data on the basis of the operating inputs, wherein the visualisation data specifies a graphical output image that is to be represented on the screen (13), wherein the visualisation data contains information about how the graphical output image is to appear to the user on the screen wherein the visualisation data is transferred to the machine (12) via the communication server software (14) and the data network (9), wherein the graphical output image is represented on the screen (21) on the basis of the visualisation data, and wherein the external computing device is not a component part of the machine and is arranged at a distance from the machine.

2. Method according to claim 1,
**characterised in that** the operating inputs and the identification code are transferred, by means of client software (3) running on the machine (12), via a data network (9) to the communication server software (14) running on an external computing device (13) or on a further external computing device (16).

3. Method according to claim 1 or 2,
**characterised in that** the visualisation data is transferred to the machine (12) via the communication server software (14) and the data network (9), wherein client software (3) running on the machine (12) determines the graphical output image on the basis of the visualisation data, and wherein the graphical output image is represented on the screen (21).

4. Method according to one of the preceding claims,
**characterised in that** the MMI application software (18a,18b,18c) is used for simulating production sequences of the machine (12) or that the MMI application software (18a,18b,18c) is used for changing part programs or that the MMI application software (18a,18b,18c) is used for diagnosing the machine (12) or that the MMI application software (18a,18b,18c) is used for monitoring the machine (12).

5. Method according to one of the preceding claims,
**characterised in that** the machine from the field of automation engineering takes the form of a machine tool, a production machine and/or a robot.

6. System for operating a machine (12) from the field of automation engineering, having a control device (7) of the machine (12), an operating unit (1) of the machine (12) and an external computing unit (13), wherein the control device (7) is designed to transfer operating inputs that have been entered at the operating unit (1), this having a screen (21), and an identification code via a data network (9) to communication server software (14) running on an external computing device (13), wherein the communication server software (14) is designed to determine, on the basis of the identification code, MMI application software that is associated with the machine (12) and the operating inputs, wherein the communication server software (14) is designed to transfer the operating inputs to the associated MMI application software (18a,18b,18c) that has been determined and is running on the external computing device (13) or on a further external computing device (16), wherein the MMI application software (18a,18b,18c) is designed to determine visualisation data on the basis of the operating inputs, wherein the visualisation data specifies a graphical output image that is to be represented on the screen (21), wherein the visualisation data contains information about how the graphical output image is to appear to the user on the screen (21), wherein the system is designed to transfer the visualisation data via the communication server software (13) and the data network (9) to the control device (7), wherein the control device (7) is designed to represent the graphical output image on the screen (21) on the basis of the visualisation data, and wherein the external computing device is not an integral part of the machine (12) and is arranged at a distance from the machine (12).

## Revendications

1. Procédé de commande d'une machine (12) de la technique d'automatisation, dans lequel on transmet des entrées de commande, effectuées sur une unité (1) de commande, ayant un écran (21), de la machine (12), et une caractérisation par un réseau (9) de données à un logiciel (14) de serveur de communication se déroulant sur un dispositif (13) d'ordinateur extérieur,
**caractérisé en ce que** le logiciel (14) de serveur de communication détermine, à l'aide de la caractérisation, un logiciel (18a, 18b, 18c) d'application d'interface homme-machine associé à la machine (12) et aux entrées de commande, le logiciel (14) de serveur de communication transmettant les entrées de commande au logiciel (18a, 18b, 18c) d'application d'interface homme-machine déterminé se déroulant sur le dispositif (13) d'ordinateur extérieur ou sur un autre dispositif (16) d'ordinateur extérieur, le logiciel (18a, 18b, 18c) d'application d'interface homme-machine déterminant, à l'aide des entrées de commande, des données de visualisation, les données de visualisation indiquant une image de sortie graphique à représenter sur l'écran (13), les données de visualisation contenant des informations sur la manière dont l'image de sortie graphique doit apparaître à l'opérateur sur l'écran, les données de visualisation étant transmises à la machine (12) par le logiciel (14) de serveur de communication et par le réseau (9) de données, dans lequel on représente, à l'aide des données de visualisation, l'image de sortie graphique sur l'écran (21) et dans lequel le dispositif d'ordinateur extérieur n'est pas une partie constitutive de la machine et est disposé en étant éloigné dans l'espace de la machine.

2. Procédé suivant la revendication 1,
**caractérisé en ce que** l'on transmet les entrées de commande et la caractérisation au moyen d'un logiciel (3) client se déroulant sur la machine (12), par l'intermédiaire d'un réseau (9) de données, au logiciel (14) de serveur de communication se déroulant sur un dispositif (13) d'ordinateur extérieur ou sur un autre dispositif (16) d'ordinateur extérieur.

3. Procédé suivant la revendication 1 ou 2,
**caractérisé en ce que** l'on transmet les données de visualisation à la machine (12) par le logiciel (14) de serveur de communication et par le réseau (9) de données, un logiciel (3) client se déroulant sur la machine (12) déterminant l'image de sortie graphique à l'aide des données de visualisation, l'image de sortie graphique étant représentée sur l'écran (21).

4. Procédé suivant l'une des revendications précédentes,
**caractérisé en ce que** le logiciel (18a, 18b, 18c) d'application d'interface homme-machine sert à simuler des déroulements de fabrication de la machine (12) ou **en ce que** le logiciel (18a, 18b, 18c) d'application d'interface homme-machine sert à modifier des programmes partiels ou **en ce que** le logiciel (18a, 18b, 18c) d'application d'interface homme-machine sert au diagnostic de la machine (12) ou **en ce que** le logiciel (18a, 18b, 18c) d'application d'interface homme-machine sert à contrôler la machine (12).

5. Procédé suivant l'une des revendications précédentes,
**caractérisé en ce que** la machine de la technique d'automatisation est constituée sous la forme d'une machine-outil, d'une machine de production et/ou d'un robot.

6. Système de commande d'une machine (12) de la technique d'automatisation, ayant un dispositif (7) de commande de la machine (12), une unité (1) de commande de la machine (12) et un dispositif (13) d'ordinateur extérieur, le dispositif (7) de commande étant constitué pour transmettre à un logiciel (14) de serveur de communication, se déroulant sur le dispositif (13) d'ordinateur extérieur, des entrées de commande effectuées sur l'unité (1) de commande ayant un écran (21), le logiciel (14) de serveur de communication étant constitué pour déterminer un logiciel (18a, 18b, 18c) d'application d'interface homme-machine associé à la machine (12) et aux entrées de commande à l'aide de la caractérisation, le logiciel (14) de serveur de communication étant constitué pour transmettre les entrées de commande au logiciel (18a, 18b, 18c) d'application d'interface homme-machine associé déterminé se déroulant sur le dispositif (13) d'ordinateur extérieur ou sur un autre dispositif (16) d'ordinateur extérieur, le logiciel (18a, 18b, 18c) d'application d'interface homme-machine étant constitué pour déterminer des données de visualisation à l'aide des entrées de commande, les données de visualisation indiquant une image de sortie graphique à représenter sur l'écran (21), les données de visualisation contenant des informations sur la manière dont l'image de sortie graphique doit apparaître à l'opérateur sur l'écran (21), dans lequel le système est constitué pour transmettre les données de visualisation au dispositif (7) de commande par le logiciel (13) de serveur de communication et par le réseau (9) de données, le dispositif (7) de commande étant constitué pour représenter l'image de sortie graphique sur l'écran (21) à l'aide des données de visualisation et le dispositif d'ordinateur extérieur n'étant pas une partie constitutive de la machine (12) et étant disposé en étant éloigné dans l'espace de la machine (12).
